(19) Europäisches Patentamt / European Patent Office / Office européen des brevets

(11) **EP 3 579 493 A1**

(12) **DEMANDE DE BREVET EUROPEEN**

(43) Date de publication:
**11.12.2019 Bulletin 2019/50**

(51) Int Cl.:
*H04L 9/00* (2006.01)      *G09C 1/00* (2006.01)

(21) Numéro de dépôt: **19178890.0**

(22) Date de dépôt: **06.06.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **08.06.2018 FR 1800583**

(71) Demandeur: **STMicroelectronics (Rousset) SAS
13790 Rousset (FR)**

(72) Inventeurs:
- **DIOP, Ibrahima
  13013 MARSEILLE (FR)**
- **LINGE, Yanis
  13710 FUVEAU (FR)**

(74) Mandataire: **Cabinet Beaumont
4, Place Robert Schuman
B.P. 1529
38025 Grenoble Cedex 1 (FR)**

(54) **PROTECTION D'UN CALCUL ITÉRATIF**

(57) L'invention concerne un procédé de protection d'un calcul sur un premier nombre (M) et un deuxième nombre (d), comportant les étapes de : générer un troisième nombre (d') comportant au moins les bits du deuxième nombre (d), le nombre (m) de bits du troisième nombre (d') étant un multiple entier d'un quatrième nombre (g) ; diviser le troisième nombre (d') en blocs ayant chacun la taille du quatrième nombre (g) ; successivement pour chaque bloc du troisième nombre (d') : effectuer une première opération avec un premier opérateur (.) sur les contenus d'un premier registre (R0) et d'un deuxième registre (R1), puis sur le résultat intermédiaire obtenu et le premier nombre (M), et placer le résultat (R0.R1.M (mod N)) dans un troisième registre (R) ; précalculer un ensemble de valeurs représentant l'application d'un deuxième opérateur (^) au contenu du troisième registre avec une fonction l'ensemble des valeurs inférieures au quatrième nombre ; et pour chaque bit du bloc courant, effectuer une deuxième opération en soumettant la valeur précalculée correspondant au rang (i) du bit courant du bloc courant du troisième nombre (d') au premier opérateur avec le contenu du premier (RO) ou du deuxième (R1) registre en fonction de l'état "0" ou "1" dudit bit, et placer le résultat dans le premier (RO) ou deuxième (R1) registre

Fig 4

EP 3 579 493 A1

**Description**

Domaine

La présente description concerne de façon générale les circuits électroniques et, plus particulièrement, les circuits exécutant des opérations itératives. La présente description concerne plus particulièrement la protection de calculs d'exponentiations modulaires ou de calculs sur courbes elliptiques contre des attaques visant à découvrir des quantités manipulées par ces calculs.

Exposé de l'art antérieur

Dans de nombreuses applications, des circuits électroniques mettent en oeuvre des algorithmes de chiffrement, d'authentification, de calcul de signature, et plus généralement des algorithmes manipulant des données, dites secrètes, c'est-à-dire dont on souhaite réserver l'accès à certains utilisateurs ou circuits. Parmi ces algorithmes, certains utilisent des opérations itératives. Il peut s'agir d'exponentiations modulaires, par exemple des algorithmes de type RSA, ou de produits sur courbes elliptiques, par exemple des algorithmes de type ECDH.

De nombreuses méthodes, dites attaques, existent pour tenter de découvrir ou pirater des données secrètes manipulées par ces calculs. Parmi ces attaques, des attaques, dites par canaux cachés, exploitent des informations indirectes telles que la consommation du circuit (attaques SPA, DPA), son rayonnement électromagnétique, etc. L'interprétation de ces informations renseigne le pirate sur la donnée secrète.

Dans les attaques par canaux cachés, on distingue notamment les attaques dites verticales, et les attaques dites horizontales.

Les attaques verticales que visent plus particulièrement un premier aspect de la présente description consistent à exploiter l'observation de fuites d'information mesurées lors de plusieurs exécutions utilisant une même information secrète à l'aide d'outils statistiques et par échantillon temporel.

Les attaques horizontales que visent plus particulièrement un deuxième aspect de la présente description consistent à comparer des segments issus d'une même trace (par exemple de consommation ou de rayonnement) entre eux, afin d'extraire l'information secrète. Elles n'utilisent qu'une seule trace d'exécution. Les contremesures de masquage de données qui sont efficaces contre des attaques verticales par canaux cachés ne le sont généralement pas contre les attaques horizontales.

Il existe un besoin d'améliorer la protection des données manipulées par des algorithmes dont chaque exécution met en oeuvre des étapes itératives, contre des attaques par canaux cachés.

Le document "Safe-Error Attack on SPA-FA Resistant Exponentiations Using a HW Modular Multiplier" de Chong Hee Kim et al, publié le 29 novembre 2007 (Information Security and Cryptology - ICISC 2007; [Lecture Notes in Computer Science], Springer Berlin Heidelberg, Berlin, Heidelberg, pages 273-281), décrit un procédé de protection d'un algorithme RSA.

Le document US 2009/0097637 décrit une exponentiation cryptographique basée sur un RSA rendu aléatoire, résistant à des attaques par canaux cachés et par injection de faute.

Le document EP 1 864 211 (WO 2006/103341) décrit un procédé de traitement de données impliquant une exponentiation modulaire et un dispositif associé.

Le document FR 2 979 725 décrit un procédé de calcul cryptographique résistant aux défaillances matérielles.

Résumé

Un mode de réalisation pallie tout ou partie des inconvénients des procédés et circuits usuels de protection de données manipulées par des algorithmes contre des attaques par canaux cachés.

Un mode de réalisation propose un procédé de protection d'un calcul par un circuit électronique qui pallie tout ou partie des inconvénients des procédés usuels.

Un mode de réalisation propose un procédé de calcul efficace contre des attaques verticales.

Un mode de réalisation propose un procédé de calcul efficace contre des attaques horizontales.

Ainsi, un mode de réalisation prévoit un procédé de protection d'un calcul sur un premier nombre et un deuxième nombre, exécuté par un circuit électronique, comportant les étapes de :

générer un troisième nombre comportant au moins les bits du deuxième nombre, le nombre de bits du troisième nombre étant un multiple entier d'un quatrième nombre ;
diviser le troisième nombre en blocs ayant chacun la taille du quatrième nombre ;
successivement pour chaque bloc du troisième nombre :

effectuer une première opération avec un premier opérateur sur les contenus d'un premier registre et d'un deuxième registre, puis sur le résultat intermédiaire obtenu et le premier nombre, et placer le résultat dans un troisième registre ;

précalculer un ensemble de valeurs représentant l'application d'un deuxième opérateur (^ ; .) au contenu du troisième registre avec une fonction du rang (i) du bit courant du bloc courant du troisième nombre (d') ; et pour chaque bit du bloc courant, effectuer une deuxième opération en soumettant la valeur précalculée correspondant au rang du bit courant du troisième nombre au premier opérateur avec le contenu du premier ou du deuxième registre en fonction de l'état "0" ou "1" dudit bit, et placer le résultat dans le premier ou deuxième registre.

Selon un mode de réalisation, ladite fonction est une élévation du nombre 2 à la puissance du rang du bit courant du troisième nombre.

Selon un mode de réalisation, le troisième nombre est obtenu par concaténation des bits du deuxième nombre et d'états "0".

Selon un mode de réalisation, le deuxième registre contient le résultat du calcul.

Selon un mode de réalisation, les premier et deuxième registres sont initialisés avec l'élément neutre du premier opérateur.

Selon un mode de réalisation, les première et deuxième opérations sont effectuées modulo un cinquième nombre.

Selon un mode de réalisation, le contenu final du troisième registre est comparé au résultat d'une troisième opération soumettant le premier nombre au deuxième opérateur avec le nombre 2 puissance le nombre de bits du deuxième nombre.

Selon un mode de réalisation, l'index des bits de chaque bloc croît de 0 à la valeur du quatrième nombre moins 1.

Selon un mode de réalisation, les bits d'un même bloc sont traités dans un ordre aléatoire.

Selon un mode de réalisation, les bits d'un même bloc sont traités successivement.

Selon un mode de réalisation, l'ordre de traitement des bits d'un même bloc résulte d'une permutation.

Selon un mode de réalisation, le calcul représente une exponentiation modulaire du premier nombre par le deuxième nombre.

Selon un mode de réalisation, le premier opérateur est la multiplication et le deuxième opérateur est l'élévation à la puissance.

Selon un mode de réalisation, le calcul représente une multiplication d'un point d'une courbe elliptique par un scalaire.

Selon un mode de réalisation, le premier opérateur est l'addition et le deuxième opérateur est la multiplication.

Un mode de réalisation prévoit un circuit électronique configuré pour la mise en oeuvre du procédé de protection.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 représente, de façon schématique, un mode de réalisation d'un circuit électronique ;
la figure 2 représente, de façon schématique, un exemple de calcul d'exponentiation modulaire ;
la figure 3 représente, sous forme de blocs, un mode de réalisation d'un procédé de protection d'un calcul d'exponentiation modulaire ;
la figure 4 représente, sous forme de blocs, un autre mode de réalisation d'un procédé de protection d'un calcul d'exponentiation modulaire ;
la figure 5 représente, sous forme de blocs et partiellement, un autre mode de réalisation d'un procédé de protection d'un calcul d'exponentiation modulaire ; et
la figure 6 représente, sous forme de blocs, un mode de réalisation d'un procédé de protection d'un calcul sur courbe elliptique.

Description détaillée

De mêmes éléments ont été désignés par de mêmes références aux différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation qui vont être décrits ont été représentés et seront détaillés. En particulier, les applications des calculs exécutés ou celles des circuits les exécutant n'ont pas été détaillées, les modes de réalisation décrits étant compatibles avec les applications usuelles.

Sauf précision contraire, lorsque l'on fait référence à deux éléments connectés entre eux, cela signifie directement connectés sans élément intermédiaire autre que des conducteurs, et lorsque l'on fait référence à deux éléments reliés entre eux, cela signifie que ces deux éléments peuvent être directement reliés (connectés) ou reliés par l'intermédiaire d'un ou plusieurs autres éléments.

Dans la description qui suit, les expressions "approximativement", "sensiblement", et "de l'ordre de" signifient à 10 % près, de préférence à 5 % près.

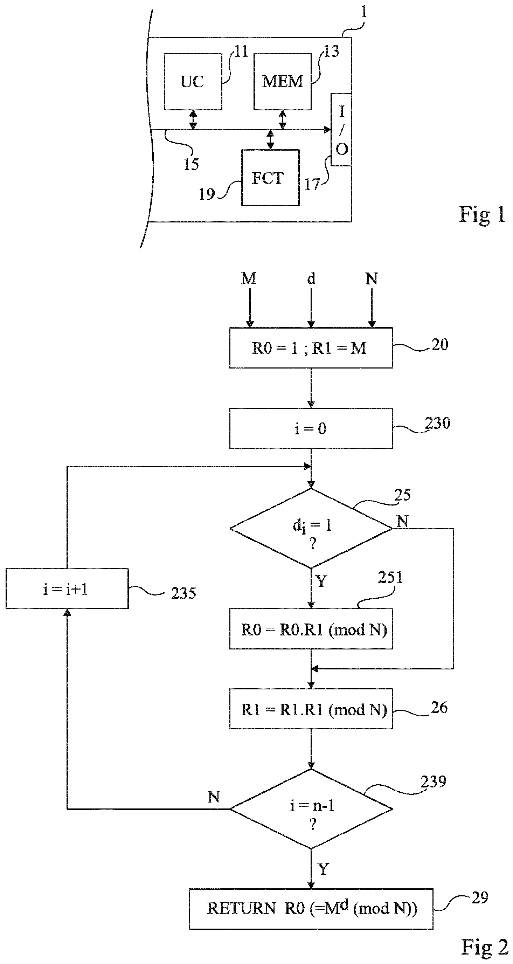

La figure 1 représente, de façon très schématique, un circuit électronique 1 du type auquel s'appliquent les modes de réalisation qui vont être décrits.

Le circuit 1 comporte :

une entité de calcul 11 (UC), par exemple une machine d'états, un microprocesseur, un circuit logique programmable, etc. ;

une ou plusieurs zones 13 (MEM) de stockage volatil et/ou non volatil pour stocker tout ou partie des données et clés ;

un ou plusieurs bus 15 de données, d'adresses et/ou de commandes entre les différents éléments internes au circuit 1 et une interface d'entrée-sortie 17 (I/O) de communication avec l'extérieur du circuit 1.

Le circuit 1 peut inclure divers autres circuits en fonction de l'application, symbolisés en figure 1 par un bloc 19 (FCT).

Des opérations de calcul itératif, par exemple d'exponentiation modulaire, se retrouvent dans de nombreux algorithmes de chiffrement parmi lesquels, par exemple, l'algorithme connu sous la dénomination RSA.

Une exponentiation modulaire consiste à calculer le résultat C de l'exponentiation d'un nombre ou message M par un exposant d (entier) modulo N, c'est-à-dire appliquer la formule :

$$C = M^d \ (mod \ N).$$

Le plus souvent :

le nombre M représente le nombre (ou une information représentative du nombre) que l'on souhaite chiffrer, authentifier, signer, etc. ; et

l'exposant d et le modulo N (le couple (d, N)) représentent la clé (ou des informations représentatives de la clé) de chiffrement, d'authentification, de signature, etc.

Des opérations de calcul itératif se trouvent également dans des opérations telles que des multiplications scalaires sur courbes elliptiques qui constituent une autre catégorie d'algorithmes de chiffrement. Une multiplication scalaire consiste à calculer le résultat C de la multiplication d'un point P d'une courbe elliptique par un entier d (scalaire) modulo N, c'est-à-dire appliquer la formule :

$$C = d.P \ (mod \ N).$$

Le plus souvent :

le point P représente le nombre (ou une information représentative du nombre) que l'on souhaite chiffrer, authentifier, signer, etc. ; et

le scalaire d et le modulo N (le couple (d, N)) représentent la clé (ou des informations représentatives de la clé) de chiffrement, d'authentification, de signature, etc.

Comme pour une exponentiation modulaire, la multiplication scalaire sur courbe elliptique par un circuit électronique (une machine d'états, un processeur exécutant le procédé sous forme de programme, un circuit logique programmable, etc.), par exemple le circuit 1, s'effectue le plus souvent par itérations, ici sur les bits du scalaire.

Par souci de simplification, on décrit divers modes de réalisation en prenant pour exemple une application à une exponentiation modulaire. La transposition de ces modes de réalisation à un calcul sur courbe elliptique est expliquée ensuite.

On fait référence à une exponentiation modulaire notée arbitrairement C = M^d (mod N), la transposition aux variables utilisées selon l'opération réalisée en pratique étant à la portée de l'homme du métier.

Le calcul de l'exponentiation modulaire par un circuit électronique (une machine d'états, un processeur exécutant le procédé sous forme de programme, un circuit logique programmable, etc.), par exemple le circuit 1, s'effectue généralement en appliquant des méthodes basées sur l'utilisation de plusieurs variables ou registres et effectuant des calculs itératifs sur les bits de l'exposant.

Dans les exemples décrits ci-dessous, le calcul utilise au moins deux registres du circuit 1, ou deux emplacements mémoire, notés arbitrairement R0 et R1 sur lesquels vont être effectuées les opérations.

Pour simplifier, on confondra les registres et leurs contenus, c'est-à-dire qu'en faisant référence à des opérations sur les registres, on entend sur leurs contenus.

La figure 2 représente, sous forme de blocs, les étapes d'un calcul usuel d'exponentiation modulaire.

Dans une première étape (bloc 20, R0 = 1 ; R1 = M), le registre R0 est initialisé à 1 et le registre R1 est chargé avec le nombre M. L'exposant d est chargé dans un autre registre (non représenté) ou réside dans la mémoire ($d_i$ représentant chaque bit de l'exposant d, où i désigne le rang allant de 0 à n-1, n représentant la taille de l'exposant).

On entame alors un calcul en boucle sur les bits de l'exposant d. Par exemple, un compteur i est initialisé à 0, représentant le bit de poids faible (bloc 230, i = 0) et est incrémenté de 1 (bloc 235, i = i+1) à chaque traitement d'un bit $d_i$ de l'exposant tant que tous les bits n'ont pas été traités (bloc 239, i = n-1 ?).

A chaque itération, c'est-à-dire pour chaque bit $d_i$ (successivement du bit le moins significatif ou de poids faible vers le bit le plus significatif ou de poids fort), on commence par tester la valeur du bit de l'exposant (bloc 25, $d_i$ = 1 ?).

Si le bit courant $d_i$ vaut 1 (sortie Y du bloc 25), le contenu du registre R0 est multiplié, modulo N, par le contenu du registre R1 et le résultat est placé dans le registre R0 (bloc 251, R0 = R0.R1 (mod N)).

Puis, ou si le bit courant $d_i$ vaut 0 (sortie N du bloc 25), le contenu du registre R1 est élevé au carré, modulo N, et le résultat est placé dans le registre R1 (bloc 26, R1 = R1.R1 (mod N)).

Tant que tous les bits de l'exposant d n'ont pas été traités (sortie N du bloc 239), on incrémente le compteur i (bloc 235, i = i+1) et on revient à l'étape 25 ($d_i$ = 1 ?). Une fois que tous les bits de l'exposant d ont été traités (sortie Y du bloc 239), le registre R0 contient le résultat de l'exponentiation modulaire (bloc 29, RETURN R0 (= $M^d$ (mod N))), c'est-à-dire la valeur C = $M^d$ (mod N).

Le calcul illustré par la figure 2 peut s'écrire également de la façon suivante :

```
R0 = 1 (étape 20)
R1 = M (étape 20)
Pour i = 0 à n-1 (étapes 230, 235, 239) :
     Si di = 1 (étape 25)
         R0 = R0.R1 (mod N) (étape 251)
     R1 = R1.R1 (mod N) (étape 26)
Fin de boucle (sortie Y du bloc 239)
Retourner R0 (étape 29).
```

On peut équilibrer les temps de calcul en effectuant le même nombre d'opérations quel que soit l'état du bit de l'exposant. Ainsi, la durée du calcul est indépendante de l'état du bit de l'exposant.

Selon les modes de réalisation décrits par la suite, on prévoit de faire intervenir systématiquement, pour chaque bit de l'exposant, un produit du contenu des deux registres R0 et R1, multiplié par le message M. Puis, ce résultat intermédiaire (stocké dans un troisième registre R), ou une puissance de ce résultat intermédiaire, est multiplié par le contenu d'un des registres R0 ou R1 en fonction de l'état du bit de l'exposant.

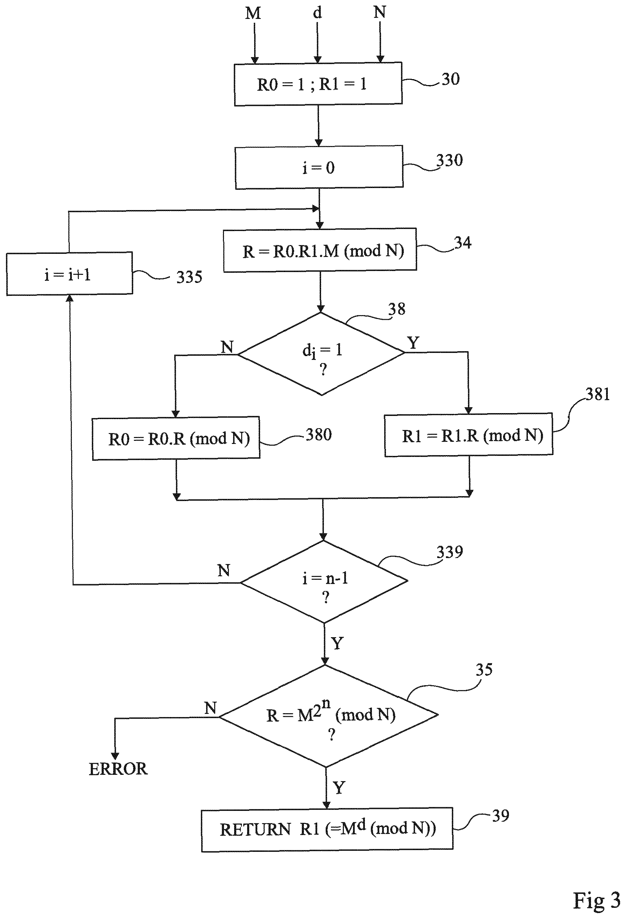

La figure 3 représente, sous forme de blocs, les étapes d'un mode de réalisation d'un calcul d'exponentiation modulaire selon un premier aspect.

Dans une première étape (bloc 30, R0 = 1 ; R1 = 1), les deux registres R0 et R1 sont initialisés à 1. Le message M est chargé dans un autre registre (non représenté) ou réside dans la mémoire. Il en est de même pour le modulo N. L'exposant d est également chargé dans un autre registre (non représenté) ou réside dans la mémoire ($d_i$ représentant chaque bit de l'exposant d, où i désigne le rang allant de 0 à n-1, n représentant la taille de l'exposant).

On entame un calcul en boucle sur les bits de l'exposant d. Par exemple, un compteur i est initialisé à 0, représentant le bit de poids faible (bloc 330, i = 0) et est incrémenté de 1 (bloc 335, i = i+1) à chaque traitement d'un bit $d_i$ de l'exposant tant que tous les bits n'ont pas été traités (bloc 339, i = n-1 ?).

A chaque itération, c'est-à-dire pour chaque bit $d_i$ (successivement du bit le moins significatif ou de poids faible vers le bit le plus significatif ou de poids fort), on commence (bloc 34, R = R0.R1.M (mod N)) par multiplier, modulo N, le contenu du registre R0 par le contenu du registre R1 et par le message M, et le résultat est placé dans un registre R.

Puis, on teste la valeur du bit de l'exposant (bloc 38, $d_i$ = 1 ?).

Si le bit courant $d_i$ vaut 0 (sortie N du bloc 38), le contenu du registre R0 est multiplié, modulo N, par le contenu du registre R et le résultat est placé dans le registre R0 (bloc 380, R0 = R0.R (mod N)).

Si le bit courant di vaut 1 (sortie Y du bloc 38), le contenu du registre R1 est multiplié, modulo N, par le contenu du registre R et le résultat est placé dans le registre R1 (bloc 381, R1 = R1.R (mod N)).

Tant que tous les bits de l'exposant d n'ont pas été traités (sortie N du bloc 339), on incrémente le compteur i (bloc 335, i = i+1) et on revient à l'étape 34. Une fois que tous les bits de l'exposant d ont été traités (sortie Y du bloc 339), le registre R1 contient le résultat de l'exponentiation modulaire, c'est-à-dire la valeur C = $M^d$ (mod N).

Selon un mode de réalisation simplifié, le contenu du registre R1 est alors retourné à l'application comme résultat (bloc 39, RETURN R1 (= $M^d$ (mod N)).

Selon un autre mode de réalisation, on ajoute, avant de fournir (bloc 39) le résultat, c'est-à-dire en sortie "Y" du bloc 339, une étape (bloc 35, R = $M^{2^n}$ (mod N)) de vérification que le contenu du registre R est égal à M élevé à la puissance 2^n (à la puissance 2 puissance n). Si la condition est respectée (sortie Y du bloc 35), on retourne le résultat. Sinon (sortie N du bloc 35), le procédé génère une erreur (ERROR).

Le calcul illustré par la figure 3 peut s'écrire également de la façon suivante :

```
        R0 = 1       (étape 30)

        R1 = 1       (étape 30)

        Pour i = 0 à n-1 (étapes 330, 335, 339) :

            R = R0.R1.M (mod N)        (étape 34)

            Si d_i = 1        (sortie Y du bloc 38)

                R1 = R1.R (mod N)      (étape 381)

            Sinon            (sortie N du bloc 38)

                R0 = R0.R (mod N)      (étape 380)

        Fin de boucle      (sortie Y du bloc 339)

        (Option :

        Si R <> M^(2^n) (mod N)  (sortie N du bloc 35)

            Erreur)

        Retourner R1      (étape 39).
```

Le procédé décrit en relation avec la figure 3 protège le calcul contre des attaques verticales en équilibrant les temps de calcul (le nombre d'opérations est indépendant de l'état des bits).

De plus, le fait d'utiliser le registre R en plus des registres R0 et R1 améliore la protection en faisant en sorte que, non seulement la nature de l'opération (multiplication) est la même dans les deux cas, mais également que l'un des opérandes (le contenu du registre R) intervient quel que soit l'état du bit de l'exposant.

En outre, l'étape 35 permet de détecter une injection de faute par inversion d'états de bits durant le calcul (safe-error attack). En effet, si l'une des opérations a été perturbée par une inversion de l'état d'au moins un bit, le test 35 permet de la détecter.

On peut également améliorer la protection en introduisant des nombres aléatoires pour masquer les données d'entrée M, d et N à chaque exécution.

La réalisation de la figure 3 est efficace sur les attaques verticales qui comparent plusieurs traces avec les mêmes données d'entrée. Elle ne protège cependant pas contre des attaques horizontales dans la mesure où les attaques horizontales n'exploitent qu'une seule trace, donc une seule exécution.

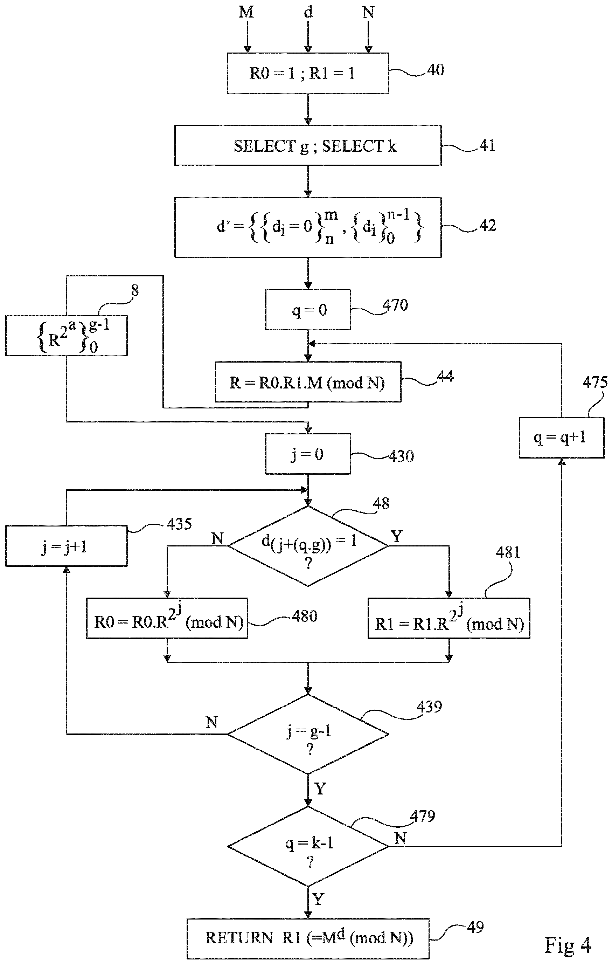

La figure 4 représente, sous forme de blocs, un autre mode de réalisation d'un procédé de protection d'un calcul d'exponentiation modulaire.

Selon ce mode de réalisation, on effectue les calculs sur des fenêtres (groupes de bits consécutifs de l'exposant) de tailles identiques. En d'autres termes, on fixe une taille g de fenêtres de bits consécutifs et on s'assure que la taille de l'exposant d soit divisible par g (que n est un multiple entier de g) ou on transforme l'exposant d sur n bits en un deuxième exposant d' plus grand (sur m bits). La taille m de l'exposant d' est alors choisie pour être un multiple k de la taille g des groupes ou fenêtres. Le deuxième exposant d' est obtenu en complétant l'exposant d'origine d (ou premier exposant) par des "0" côté bits les plus significatifs (bits de n à m-1, c'est-à-dire de n à (k.g)-1). Cela revient à obtenir le deuxième exposant d' par concaténation du premier exposant d et de bits à l'état "0".

On suppose par la suite le cas d'un exposant d' sur m bits, avec m supérieur à n, mais tout ce qui est décrit se transpose à un exposant d qui n'est pas agrandi, mais qui est divisible en un nombre entier de fenêtres de g bits.

Ainsi, dans une première étape (bloc 40, R0 = 1 ; R1 = 1), les deux registres R0 et R1 sont initialisés à 1. Le message M est chargé dans un autre registre (non représenté) ou réside dans la mémoire. Il en est de même pour le modulo N. L'exposant d est également chargé dans un autre registre (non représenté) ou réside dans la mémoire (di représentant chaque bit de l'exposant d, où i désigne le rang allant de 0 à n-1, n représentant la taille d'origine de l'exposant).

On sélectionne (bloc 41, SELECT g ; SELECT k) la taille g des fenêtres ou groupes de bits, ainsi que le coefficient multiplicateur k (entier) pour que le nombre m soit un multiple de g. Dans le cas où n est un multiple de g, on peut choisir k tel que m = n = k.g.

On modifie alors l'exposant d afin qu'il comporte m bits, sans modifier sa valeur. En d'autres termes, on complète l'exposant d, côté bits de poids fort de n à m-1 par des "0" (bloc 42, $d' = \{\{d_i = 0\}_n^{m-1}, \{d_i\}_0^{n-1}\}$ ) pour obtenir l'exposant modifié d'. Ainsi, i devient le rang allant de 0 à m-1.

On entame ensuite un calcul en boucle sur les k fenêtres $W_q$, q allant de 0 à k-1. Par exemple, un compteur q est initialisé à 0 (bloc 470, q = 0) et est incrémenté de 1 (bloc 475, q = q+1) à chaque traitement d'une fenêtre W tant que toutes les fenêtres n'ont pas été traitées (bloc 479, q = k-1 ?).

A chaque itération, c'est-à-dire pour chaque fenêtre $W_q$, on commence (bloc 44, R = R0.R1.M (mod N)) par multiplier, modulo N, le contenu du registre R0 par le contenu du registre R1 et par le message M, et le résultat est placé dans un registre R.

Puis, on précalcule un ensemble de puissances du contenu du registre R. Cela revient à calculer et à stocker une table de puissances $2^a$ du contenu du registre R (bloc 8, $\{R^{2^a}\}$) avec a allant de 0 à g-1 (g représentant la taille en nombre de bits des fenêtres). Les g valeurs de puissance de R obtenues sont stockées, de préférence, dans un ensemble de registres.

On effectue ensuite un calcul en boucle sur les bits di (de l'exposant d') de la fenêtre $W_q$ courante. Par exemple, un compteur j est initialisé à 0 (bloc 430, j = 0) et est incrémenté de 1 (bloc 435, j = j+1) à chaque traitement d'un bit de l'exposant tant que tous les bits $d_{j+(q.g)}$ de la fenêtre $W_q$ n'ont pas été traités (bloc 439, j = g-1 ?).

A chaque itération, c'est-à-dire pour chaque bit di (successivement du bit le moins significatif ou de poids faible $d_{(q.g)}$ vers le bit le plus significatif ou de poids fort $d_{(q+1).g-1}$ ou $d_{g-1+(q.g)}$ de la fenêtre), on commence par tester la valeur du bit di (avec i = j+(q.g)) de l'exposant (bloc 48, $d_{j+(q.g)}$ = 1 ?).

Si le bit courant $d_{j+(q.g)}$ vaut 0 (sortie N du bloc 48), le contenu du registre R0 est multiplié, modulo N, par le contenu du registre contenant R élevé à la puissance $2^j$ (ou 2^j), et le résultat est placé dans le registre R0 (bloc 480, R0 = R0. $R^{2^j}$ (mod N)).

Si le bit courant $d_{j+(q.g)}$ vaut 1 (sortie Y du bloc 48), le contenu du registre R1 est multiplié, modulo N, par le contenu du registre contenant R élevé à la puissance $2^j$ (ou 2^j), et le résultat est placé dans le registre R1 (bloc 481, R1 = R1.$R^{2^j}$ (mod N)).

Ainsi, le calcul tient compte de l'index du bit dans la fenêtre.

On notera qu'avant de commencer à traiter les bits de chaque fenêtre, l'ensemble des puissances de R nécessaires pour la fenêtre concernée sont calculées et stockées de préférence dans un ensemble de registres.

Tant que tous les bits de la fenêtre $W_q$ n'ont pas été traités (sortie N du bloc 439), on incrémente le compteur j (bloc 435, j = j+1) et on revient à l'étape 48. Une fois que tous les bits de la fenêtre $W_q$ ont été traités (sortie Y du bloc 439), on passe à la fenêtre suivante.

Ainsi, tant que toutes les fenêtres $W_q$ n'ont pas été traitées (sortie N du bloc 479), on incrémente le compteur q (bloc 475, q = q+1) et on revient à l'étape 44. Une fois que toutes les fenêtres $W_q$ ont été traitées, donc tous les bits de l'exposant d', (sortie Y du bloc 479), le registre R1 contient le résultat de l'exponentiation modulaire (bloc 49, RETURN R1 (= $M^d$ (mod N)), c'est-à-dire la valeur C = $M^d$ (mod N).

Le calcul illustré par la figure 4 peut s'écrire également de la façon suivante :

```
R0 = 1    (étape 40)
R1 = 1    (étape 40)
Choisir g, choisir k      (étape 41)
```
$$d' = \{\{d_i = 0\}_n^{m-1}, \{d_i\}_0^{n-1}\} \quad \text{(étape 42)}$$
```
Pour q = 0 à k-1     (étapes 470, 475, 479) :
    R = R0.R1.M (mod N)  (étape 44)
```
$$\text{Calcul de } \{R^{2^a}\}_0^{g-1} \quad \text{(étape 8)}$$
```
    Pour j = 0 à g-1      (étapes 430, 435, 439) :
        Si d_{j+(q.g)} = 1 (sortie Y de l'étape 48)
```
$$R1 = R1.R^{2\hat{\;}j} \pmod N \quad \text{(étape 481)}$$
```
        Sinon               (sortie N de l'étape 48)
```
$$R0 = R0.R^{2\hat{\;}j} \pmod N \quad \text{(étape 480)}$$
```
    Fin de boucle          (sortie Y du bloc 439)
Fin de boucle        (sortie Y du bloc 479)
Retourner R1 (étape 39).
```

Une autre façon d'écrire ce calcul est :

```
Choisir g
Choisir m tel que m/g est un entier (k)
```

$$d' = \{\{d_i = 0\}_n^{m-1}, \{d_i\}_0^{n-1}\}$$
```
R0 = 1
R1 = 1
Pour q = 0 à k-1 :
    W = [d_{q.g}, d_{(q.g)+1}, …, d_{((q+1).g)-1}]
    R = R0.R1.M (mod N)
```
$$\text{Calcul de } \{R^{2^a}\}_0^{g-1}$$
```
    Pour j = 0 à g-1 :
```
$$R_{W[j]} = R_{W[j]}.R^{2\hat{\;}j}, \text{ où } W[j] \text{ représente le}$$
bit de rang j dans la fenêtre W, donc le bit $d_{j+(q.g)}$ de l'exposant d'.

Ce mode de réalisation est résistant contre des attaques verticales et respecte un même nombre d'opérations quel que soit l'état du bit traité, ainsi que l'utilisation d'un même registre (R) comme opérande à chaque tour quel que soit l'état du bit de l'exposant.
En variante, on peut également introduire le test final (étape 35, figure 3) afin de détecter une injection de faute.
L'ordre des étapes 40 et 41, 42 n'a pas d'importance (on peut commencer par définir les fenêtres et générer l'exposant d', avant d'initialiser les registres R0 et R1).

De même, l'ordre de traitement des bits à l'intérieur de chaque fenêtre n'a pas d'importance.

Selon le mode de réalisation illustré par la figure 4, les bits de la fenêtre courante sont traités séquentiellement. Ils pourraient également être traités dans l'ordre inverse.

Selon un autre mode de réalisation, les bits de la fenêtre courante sont traités dans un ordre aléatoire.

Selon un autre mode de réalisation, on effectue une permutation (circulaire ou non) définie des bits de l'exposant dans chaque fenêtre. Cette permutation peut être la même pour toutes les fenêtres ou être différente d'une fenêtre à l'autre.

Cela revient à ajouter, avant l'étape 430, une étape réalisant une permutation s des positions (ou poids) des g bits de la fenêtre courante et à faire intervenir, dans les étapes 480 et 481, le rang du bit résultant de cette permutation.

Le mode de réalisation décrit en relation avec la figure 4 est résistant aux attaques horizontales. En effet, le traitement de l'exposant par fenêtres de bits rend plus difficile l'exploitation de la trace unique dans le cadre d'une attaque horizontale. En particulier, l'index du bit de l'exposant intervient directement dans le calcul. La protection est améliorée en traitant les bits à l'intérieur des fenêtres dans un ordre différent que leur ordre dans l'exposant.

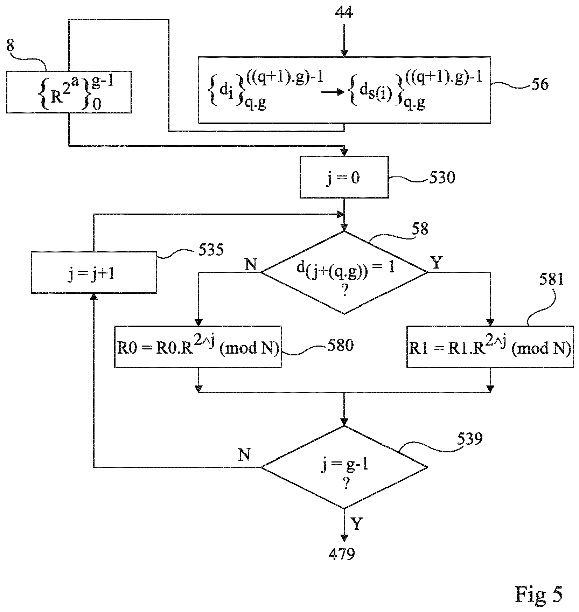

La figure 5 représente les étapes de la boucle sur les bits de chaque fenêtre (remplaçant les étapes 430, 48, 480, 481, 435 et 439) selon ce mode de réalisation, les autres étapes étant inchangées par rapport au mode de réalisation de la figure 4.

Après l'étape 44 (figure 4), on réalise une permutation s (bloc 56, $\{d_i\}_{q.g}^{((q+1).g)-1} \rightarrow \{d_{s(i)}\}_{q.g}^{((q+1).g)-1}$ ) des bits $d_i$ de la fenêtre $W_q$ courante. Par exemple, la permutation s consiste en une permutation circulaire. Selon un autre exemple, la permutation s est une permutation aléatoire.

Avant de commencer à traiter les bits de chaque fenêtre, l'ensemble $\{R^{2^a}\}_0^{g-1}$ des puissances de R nécessaires pour la fenêtre concernée sont calculées et stockées.

On effectue ensuite toujours un calcul en boucle sur les bits $d_{s(i)}$ (de l'exposant d') de la fenêtre $W_q$ courante. En reprenant le même exemple qu'en figure 4, un compteur j est initialisé à 0 (bloc 530, j = 0) et est incrémenté de 1 (bloc 535, j = j+1) à chaque traitement d'un bit de l'exposant tant que tous les bits $d_{j+(q.g)}$ de la fenêtre $W_q$ n'ont pas été traités (bloc 539, j = g-1 ?). Toutefois, les bits de la fenêtre sont ici traités dans l'ordre résultant de la permutation s.

A chaque itération à l'intérieur de la fenêtre, c'est-à-dire pour chaque bit $d_{s(i)}$, avec s(i) = j+(q.g), on commence par tester la valeur du bit $d_{j+(q.g)}$ de l'exposant (bloc 58, $d_{j+(q.g)}$ = 1 ?).

Si le bit courant $d_{j+(q.g)}$ vaut 0 (sortie N du bloc 58), le contenu du registre R0 est multiplié, modulo N, par le contenu du registre contenant R élevé à la puissance $2^j$ (ou 2^j), et le résultat est placé dans le registre R0 (bloc 580, R0 = R0.R$^{2^j}$ (mod N)).

Si le bit courant $d_{j+(q.g)}$ vaut 1 (sortie Y du bloc 58), le contenu du registre R1 est multiplié, modulo N, par le contenu du registre contenant R élevé à la puissance $2^j$ (ou 2^j), et le résultat est placé dans le registre R1 (bloc 581, R1 = R1.R$^{2^j}$ (mod N)).

Tant que tous les bits de la fenêtre $W_q$ n'ont pas été traités (sortie N du bloc 539), on incrémente le compteur j (bloc 535, j = j+1) et on revient à l'étape 58. Une fois que tous les bits de la fenêtre $W_q$ ont été traités (sortie Y du bloc 539), on passe à la fenêtre suivante (bloc 479, figure 4) tant que les fenêtres n'ont pas toutes été traitées.

On notera que le calcul de la permutation peut s'effectuer à la volée, c'est-à-dire dans la boucle 53. Dans ce cas, l'étape 56 est omise et l'indice j de la boucle 53 est remplacé par s(j).

Le calcul illustré par la figure 5 peut s'écrire également de la façon suivante :

```
R0 = 1    (étape 40)
R1 = 1    (étape 40)
Choisir g, choisir k      (étape 41)
```

$$\mathrm{d'} \ = \ \{\{d_i = 0\}_n^{m-1}, \{d_i\}_0^{n-1}\} \quad \text{(étape 42)}$$

```
Pour q = 0 à k-1     (étapes 470, 475, 479) :
        R = R0.R1.M (mod N)   (étape 44)
```

$$\{d_i\}_{q.g}^{((q+1).g)-1} \rightarrow \{d_{s(i)}\}_{q.g}^{((q+1).g)-1} \qquad \text{(étape 56)}$$

$$\text{Calcul de } \{R^{2^a}\}_0^{g-1} \qquad \text{(étape 8)} \qquad \text{Pour } j = 0$$

```
à g-1        (étapes 530, 535, 539) :
            Si dj+(q.g) = 1 (sortie Y de l'étape 58)
```

$$R1 = R1.R^{2\hat{\ }j} \ (\text{mod } N) \quad \text{(étape 581)}$$

```
            Sinon          (sortie N de l'étape 58)
```

$$R0 = R0.R^{2\hat{\ }j} \ (\text{mod } N) \quad \text{(étape 580)}$$

```
        Fin de boucle        (sortie Y du bloc 539)
    Fin de boucle      (sortie Y du bloc 479)
    Retourner R1 (étape 49).
```

Une autre façon d'écrire ce calcul est :

```
Choisir g
Choisir m tel que m/g est un entier (k)
```

$$\mathrm{d'} \ = \ \{\{d_i = 0\}_n^{m-1}, \{d_i\}_0^{n-1}\}$$

```
R0 = 1
R1 = 1
Pour q = 0 à k-1 :
    W = [dq.g, d(q.g)+1, …, d((q+1).g)-1]
    R = R0.R1.M (mod N)
```

$$\text{Calcul de } \{R^{2^a}\}_0^{g-1}$$

```
    s = permutation dans W
    Pour j = 0 à g-1 :
```

$$R_{W[s(j)]} = \ R_{W[s(j)]}.R^{2\hat{\ }s(j)}, \quad \text{où} \quad W[s(j)]$$

```
représente le bit de rang s(j) de la fenêtre W.
```

Les modes de réalisations illustrés en relation avec les figures 3 à 5 se transposent à un autre type de calcul itératif utilisé en cryptographie, à savoir les produits sur courbes elliptiques.

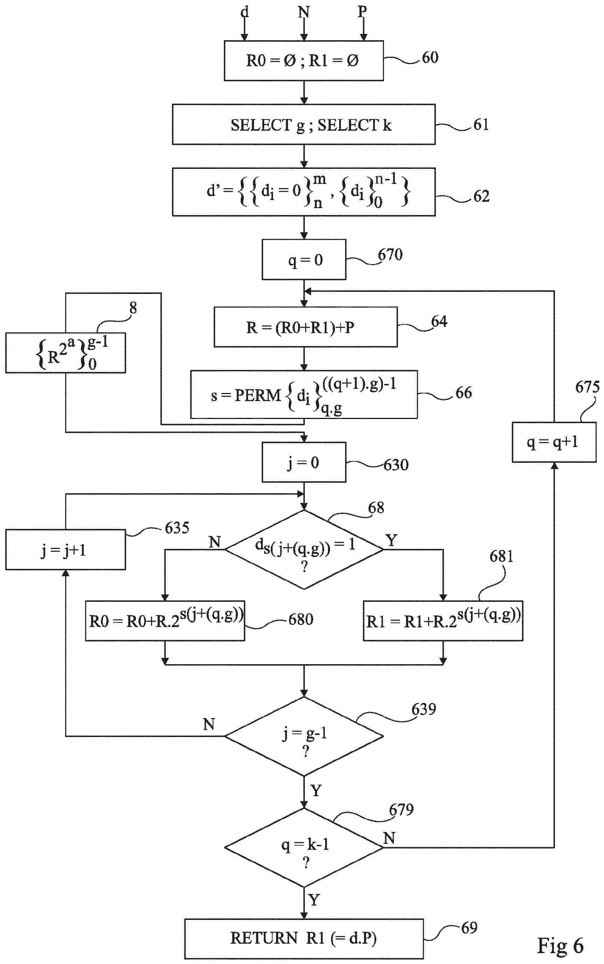

La figure 6 représente, sous forme de blocs, un mode de réalisation d'un procédé de protection d'un calcul sur courbe elliptique, reprenant le mode de réalisation de la figure 5.

Pour simplifier, on ne précise pas à chaque opération qu'il s'agit d'une opération modulaire, mais toutes les opérations de la figure 6 sont également effectuées modulo N.

Comme pour une exponentiation modulaire, on effectue les calculs sur des fenêtres (groupes de bits consécutifs de l'exposant) de tailles identiques (g bits) et on complète le cas échéant le scalaire d par des 0 côté bits de poids fort.

On suppose par la suite le cas d'un scalaire d' sur m bits, avec m supérieur à n, mais tout ce qui est décrit se transpose à un scalaire d qui n'est pas agrandi, mais qui est divisible en un nombre entier de fenêtres de g bits.

Dans une première étape (bloc 60, R0 = Ø ; R1 = Ø), les deux registres R0 et R1 sont initialisés à Ø, qui représente l'élément neutre de la courbe elliptique. Le point P est chargé dans un autre registre (non représenté) ou réside dans la mémoire. Il en est de même pour le modulo N. Le scalaire d est également chargé dans un autre registre (non représenté) ou réside dans la mémoire (di représentant chaque bit du scalaire d, où i désigne le rang allant de 0 à n-1, n représentant la taille d'origine du scalaire d).

On sélectionne (bloc 61, SELECT g ; SELECT k) la taille g des fenêtres ou groupes de bits, ainsi que le coefficient multiplicateur k (entier) pour que le nombre m soit un multiple de g. Dans le cas où n est un multiple de g, on peut choisir k tel que m = n = k.g.

On modifie alors le nombre d afin qu'il comporte m bits, sans modifier sa valeur. En d'autres termes, on complète le nombre d, côté bits de poids fort de n à m-1 par des "0" (bloc 62, $d' = \{\{d_i = 0\}_n^{m-1}, \{d_i\}_0^{n-1}\}$ ) pour obtenir le scalaire modifié d'. Ainsi, i devient le rang allant de 0 à m.

On entame ensuite un calcul en boucle sur les k fenêtres $W_q$, q allant de 0 à k-1. Par exemple, un compteur q est initialisé à 0 (bloc 670, q = 0) et est incrémenté de 1 (bloc 675, q = q+1) à chaque traitement d'une fenêtre tant que toutes les fenêtres n'ont pas été traitées (bloc 679, q = k-1 ?).

A chaque itération, c'est-à-dire pour chaque fenêtre $W_q$, on commence (bloc 64, R = (R0+R1)+P) par additionner les contenus des registres R0 et R1 et on ajoute, au résultat obtenu, le point P. Le résultat est placé dans un registre R.

Avant de commencer à traiter les bits de chaque fenêtre, l'ensemble $\{R^{2^a}\}_0^{g-1}$ des puissances de R nécessaires pour la fenêtre concernée sont calculées et stockées.

On suppose que l'on applique une permutation des bits du scalaire à l'intérieur de chaque fenêtre. La figure 6 illustre la variante selon laquelle la permutation est calculée à la volée pour chaque bit et non à l'avance comme c'était le cas pour la figure 5. Ainsi, on définit (bloc 66, $s = PERM\{d_i\}_{q.g}^{((q+1).g)-1}$ ) une permutation s, par exemple, circulaire, aléatoire ou autre.

On effectue ensuite un calcul en boucle sur les bits di de la fenêtre $W_q$ courante. Par exemple, un compteur j est initialisé à 0 (bloc 630, j = 0) et est incrémenté de 1 (bloc 635, j = j+1) à chaque traitement d'un bit de la fenêtre tant que tous les bits de la fenêtre $W_q$ n'ont pas été traités (bloc 639, j = g-1 ?).

A chaque itération, c'est-à-dire pour chaque bit $d_{s(j+(q.g))}$, on commence par tester la valeur du bit du scalaire (bloc 68, $d_{s(j+(q.g))}$ = 1 ?).

Si le bit courant vaut 0 (sortie N du bloc 68), le contenu du registre contenant R multiplié par 2 puissance s(j) ($2^{s(j)}$ ou 2^s(j) est additionné au contenu du registre R0 et le résultat de l'addition est placé dans le registre R0 (bloc 680, R0 = R0+R.$2^{s(j)}$).

Si le bit courant vaut 1 (sortie Y du bloc 68), le contenu du registre contenant R est multiplié par 2 puissance s(j) ($2^{s(j)}$ ou 2^s(j) est additionné au contenu du registre R1 et le résultat de l'addition est placé dans le registre R1 (bloc 681, R1 = R1+R.$2^{s(j+(q.g))}$).

Tant que tous les bits de la fenêtre $W_q$ n'ont pas été traités (sortie N du bloc 639), on incrémente le compteur j (bloc 635, j = j+1) et on revient à l'étape 68. Une fois que tous les bits de la fenêtre $W_q$ ont été traités (sortie Y du bloc 639), on passe à la fenêtre suivante.

Ainsi, tant que toutes les fenêtres $W_q$ n'ont pas été traitées (sortie N du bloc 679), on incrémente le compteur q (bloc 675, q = q+1) et on revient à l'étape 64. Une fois que toutes les fenêtres $W_q$ ont été traitées (sortie Y du bloc 679), donc tous les bits du scalaire d', le registre R1 contient le résultat de la multiplication sur courbe elliptique (bloc 69, RETURN R1 (= d.P)), c'est-à-dire la valeur C = d.P (mod N).

Le calcul illustré par la figure 6 peut s'écrire également de la façon suivante :

```
R0 = ∅   (étape 60)
R1 = ∅   (étape 60)
Choisir g, choisir k      (étape 61)
```

$$d' = \{\{d_i = 0\}_n^{m-1}, \{d_i\}_0^{n-1}\} \quad \text{(étape 62)}$$

```
Pour q = 0 à k-1    (étapes 670, 675, 679) :
        R = (R0+R1)+P          (étape 64)
```

$$\text{Calcul de } \{R^{2^a}\}_0^{g-1} \quad \text{(étape 8)}$$

$$S = PERM\{d_i\}_{q.g}^{((q+1).g)-1} \quad \text{(étape 66)}$$

```
        Pour j = 0 à g-1      (étapes 630, 635, 639) :
            Si d_S(j+(q.g)) = 1 (sortie Y de l'étape 68)
                R1 = R1+R.2^S(j+(q.g))   (étape 681)

            Sinon               (sortie N de l'étape 68)
                R0 = R0+R.2^S(j+(q.g))   (étape 680)

        Fin de boucle       (sortie Y du bloc 639)
    Fin de boucle       (sortie Y du bloc 679)
    Retourner R1 (étape 69).
```

Une autre façon d'écrire ce calcul est :

```
        Choisir g
        Choisir m tel que m/g est un entier (k)
```

$$d' = \{\{d_i = 0\}_n^{m-1}, \{d_i\}_0^{n-1}\}$$

```
        R0 = ∅
        R1 = ∅
        Pour q = 0 à k-1 :
            W = [d_q.g, d_(q.g)+1, …, d_((q+1).g)-1]
            R = (R0+R1)+P
```

$$\text{Calcul de } \{R^{2^a}\}_0^{g-1}$$

$$S = PERM\{d_i\}_{q.g}^{((q+1).g)-1}$$

```
        Pour j = 0 à g-1 :
```

$$R_{W[s(j)]} = R_{W[s(j)]} + R.2^{S(j)}, \quad \text{où} \quad W[s(j)]$$

représente le bit de rang j dans la fenêtre W, donc le bit
d_S(j+(p.g)) du scalaire d'.

Bien que l'on ait décrit l'exemple appliqué aux courbes elliptiques en relation avec un mode de réalisation équivalent à celui de la figure 5 pour l'exponentiation modulaire, les modes de réalisation des figures 3 et 4 se transposent de façon similaire aux calculs sur courbes elliptiques.

Par ailleurs, on peut également renforcer la protection du calcul sur courbes elliptiques par une protection contre des injections de faute en intercalant, avant fourniture du résultat, une étape de vérification équivalente à l'étape 35 (figure 3). Dans ce cas, on vérifie que le contenu du registre R est égal à $2^n.P \pmod N$.

Plus généralement, selon les modes de réalisation décrits, pour soumettre un premier nombre (le message M pour l'exponentiation modulaire, le point d'une courbe elliptique) à un calcul itératif avec un deuxième nombre (l'exposant pour l'exponentiation modulaire, le scalaire pour les courbes elliptiques), on prévoit une opération avec un premier opérateur (la multiplication pour l'exponentiation modulaire, l'addition pour les courbes elliptiques) sur le contenu des deux registres R0 et R1, puis sur le résultat intermédiaire et le premier nombre. Le résultat de cette opération est placé dans le registre R.

Puis, le résultat de l'opération précédente (stocké dans le registre R), est soumis à un deuxième opérateur (l'élévation de puissance pour l'exponentiation modulaire, la multiplication pour les courbes elliptiques) avec une fonction du rang du bit courant du deuxième nombre, puis est soumis au premier opérateur avec le contenu d'un des registres R0 ou R1 en fonction de l'état du bit du deuxième nombre.

Dans le mode de réalisation de la figure 3, la première opération est effectuée pour chaque bit du deuxième nombre.

Dans les modes de réalisation des figures 4 à 6, le deuxième nombre est découpé en fenêtres ou groupes de bits et la première opération est effectuée une fois par fenêtre de bits du deuxième nombre.

Des modes de réalisation particuliers ont été décrits. Diverses variantes et modifications apparaîtront à l'homme de l'art. En particulier, le choix de la taille des fenêtres et de la longueur de l'exposant d' dépend de l'application et du temps de calcul acceptable.

## Revendications

1. Procédé de protection d'un calcul sur un premier nombre (M, P) et un deuxième nombre (d), exécuté par un circuit électronique (1), comportant les étapes de :

   générer un troisième nombre (d') comportant au moins les bits du deuxième nombre (d), le nombre (m) de bits du troisième nombre (d') étant un multiple entier d'un quatrième nombre (g) ;
   diviser le troisième nombre (d') en blocs ayant chacun la taille du quatrième nombre (g) ;
   successivement pour chaque bloc du troisième nombre (d') :

   effectuer une première opération avec un premier opérateur (. ; +) sur les contenus d'un premier registre (R0) et d'un deuxième registre (R1), puis sur le résultat intermédiaire obtenu et le premier nombre (M ; P), et placer le résultat (RO.R1.M (mod N) ; (R0+R1)+P) dans un troisième registre (R) ;
   précalculer un ensemble de valeurs représentant l'application d'un deuxième opérateur (^ ; .) au contenu du troisième registre avec une fonction du rang (i) du bit courant du bloc courant du troisième nombre (d') ; et
   pour chaque bit du bloc courant, effectuer une deuxième opération en soumettant la valeur précalculée correspondant au rang (i) du bit courant du troisième nombre (d') au premier opérateur avec le contenu du premier (R0) ou du deuxième (R1) registre en fonction de l'état "0" ou "1" dudit bit, et placer le résultat dans le premier (R0) ou deuxième (R1) registre.

2. Procédé selon la revendication 1, dans lequel ladite fonction est une élévation du nombre 2 à la puissance du rang du bit courant du troisième nombre (d').

3. Procédé selon la revendication 1 ou 2, dans lequel le troisième nombre (d') est obtenu par concaténation des bits du deuxième nombre (d) et d'états "0".

4. Procédé selon l'une quelconque des revendications 1 à 3, dans lequel le deuxième registre (R1) contient le résultat du calcul.

5. Procédé selon l'une quelconque des revendications 1 à 4, dans lequel les premier (R0) et deuxième (R1) registres sont initialisés avec l'élément neutre (1 ; 0) du premier opérateur (. ; +).

6. Procédé selon l'une quelconque des revendications 1 à 5, dans lequel les première et deuxième opérations sont effectuées modulo un cinquième nombre (N).

7. Procédé selon l'une quelconque des revendications 1 à 6, dans lequel le contenu final du troisième registre (R) est comparé (35) au résultat d'une troisième opération soumettant le premier nombre (M ; P) au deuxième opérateur (^ ; .) avec le nombre 2 puissance le nombre (n) de bits du deuxième nombre (d).

8. Procédé selon l'une quelconque des revendications 1 à 7, dans lequel l'index (j) des bits de chaque bloc croît de 0 à la valeur du quatrième nombre (g) moins 1.

9. Procédé selon l'une quelconque des revendications 1 à 8, dans lequel les bits d'un même bloc sont traités dans un ordre aléatoire.

10. Procédé selon l'une quelconque des revendications 1 à 8, dans lequel les bits d'un même bloc sont traités successivement.

11. Procédé selon l'une quelconque des revendications 1 à 8, dans lequel l'ordre de traitement des bits d'un même bloc résulte d'une permutation (s).

12. Procédé selon l'une quelconque des revendications 1 à 11, dans lequel le calcul représente une exponentiation modulaire du premier nombre (M) par le deuxième nombre (d).

13. Procédé selon la revendication 12, dans lequel le premier opérateur est la multiplication (.) et le deuxième opérateur est l'élévation à la puissance (^).

14. Procédé selon l'une quelconque des revendications 1 à 11, dans lequel le calcul représente une multiplication d'un point (P) d'une courbe elliptique par un scalaire (d).

15. Procédé selon la revendication 14, dans lequel le premier opérateur est l'addition (+) et le deuxième opérateur est la multiplication (.).

16. Circuit électronique (1) configuré pour la mise en oeuvre du procédé selon l'une quelconque des revendications 1 à 15.

Fig 1

Fig 2

Fig 3

M    d    N

$R0 = 1 ; R1 = 1$ — 40

SELECT g ; SELECT k — 41

$d' = \left\{ \left\{ d_i = 0 \right\}_n^m , \left\{ d_i \right\}_0^{n-1} \right\}$ — 42

$q = 0$ — 470

$\left\{ R^{2^a} \right\}_0^{g-1}$ — 8

$R = R0.R1.M \ (mod \ N)$ — 44

$j = 0$ — 430

475

$q = q+1$ — 475

$j = j+1$ — 435

$d_{(j+(q.g))} = 1$ ? — 48    N    Y

$R0 = R0.R^{2^j} \ (mod \ N)$ — 480

$R1 = R1.R^{2^j} \ (mod \ N)$ — 481

$j = g-1$ ? — 439    N    Y

$q = k-1$ ? — 479    N    Y

$RETURN \ R1 \ (= M^d \ (mod \ N))$ — 49

Fig 4

$$\left\{ R^{2^a} \right\}_0^{g-1} \qquad 8$$

$$\left\{ d_i \right\}_{q.g}^{((q+1).g)-1} \longrightarrow \left\{ d_{s(i)} \right\}_{q.g}^{((q+1).g)-1} \qquad 56$$

44

$$j = 0 \qquad 530$$

$$j = j+1 \qquad 535$$

$$d_{(j+(q.g))} = 1 \ ? \qquad 58$$

N          Y

$$R0 = R0.R^{2^{\wedge}j} \ (\bmod \ N) \qquad 580$$

$$R1 = R1.R^{2^{\wedge}j} \ (\bmod \ N) \qquad 581$$

N

$$j = g-1 \ ? \qquad 539$$

Y

479

Fig 5

$$R0 = \emptyset \; ; R1 = \emptyset$$  ⌐ 60

$$\text{SELECT } g \; ; \text{SELECT } k$$  ⌐ 61

$$d' = \left\{ \left\{ d_i = 0 \right\}_n^m , \left\{ d_i \right\}_0^{n-1} \right\}$$  ⌐ 62

$$q = 0$$  ⌐ 670

$$R = (R0+R1)+P$$  ⌐ 64

$$\left\{ R^{2^a} \right\}_0^{g-1}$$  ⌐ 8

$$s = \text{PERM} \left\{ d_i \right\}_{q.g}^{((q+1).g)-1}$$  ⌐ 66

$$j = 0$$  ⌐ 630

$$q = q+1$$  ⌐ 675

$$j = j+1$$  ⌐ 635

68

$$d_{s(j+(q.g))} = 1 \; ?$$

N ← → Y

$$R0 = R0+R.2^{s(j+(q.g))}$$  ⌐ 680

681

$$R1 = R1+R.2^{s(j+(q.g))}$$

639

$$j = g-1 \; ?$$

N  Y

679

$$q = k-1 \; ?$$

N  Y

$$\text{RETURN } R1 \; (= d.P)$$  ⌐ 69

Fig 6

Europäisches
Patentamt

European
Patent Office

Office européen
des brevets

**RAPPORT DE RECHERCHE EUROPEENNE**

Numéro de la demande

EP 19 17 8890

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CHONG HEE KIM ET AL: "Safe-Error Attack on SPA-FA Resistant Exponentiations Using a HW Modular Multiplier", 29 novembre 2007 (2007-11-29), INFORMATION SECURITY AND CRYPTOLOGY - ICISC 2007; [LECTURE NOTES IN COMPUTER SCIENCE], SPRINGER BERLIN HEIDELBERG, BERLIN, HEIDELBERG, PAGE(S) 273 - 281, XP019083112, ISBN: 978-3-540-76787-9 * page 276 * | 1-16 | INV. H04L9/00 G09C1/00 |
| X | US 2009/097637 A1 (BOSCHER ARNAUD [FR] ET AL) 16 avril 2009 (2009-04-16) * figure 7 * | 1-16 | |
| X | EP 1 864 211 A1 (OBERTHUR CARD SYST SA [FR]) 12 décembre 2007 (2007-12-12) * figure 1 * | 1-16 | |
| X | FR 2 979 725 A1 (OBERTHUR TECHNOLOGIES [FR]) 8 mars 2013 (2013-03-08) * page 15 * | 1-16 | DOMAINES TECHNIQUES RECHERCHES (IPC) |
| X | US 2009/180610 A1 (TOBERGTE WOLFGANG [DE]) 16 juillet 2009 (2009-07-16) * figures 5-7 * | 1-16 | H04L G09C |

Le présent rapport a été établi pour toutes les revendications

| Lieu de la recherche | Date d'achèvement de la recherche | Examinateur |
|---|---|---|
| Munich | 23 septembre 2019 | Manet, Pascal |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 19 17 8890

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

23-09-2019

| Document brevet cité au rapport de recherche | | Date de publication | Membre(s) de la famille de brevet(s) | | Date de publication |
|---|---|---|---|---|---|
| US 2009097637 | A1 | 16-04-2009 | AUCUN | | |
| EP 1864211 | A1 | 12-12-2007 | AT | 458219 T | 15-03-2010 |
| | | | EP | 1864211 A1 | 12-12-2007 |
| | | | ES | 2337925 T3 | 30-04-2010 |
| | | | FR | 2884004 A1 | 06-10-2006 |
| | | | US | 2009240756 A1 | 24-09-2009 |
| | | | WO | 2006103341 A1 | 05-10-2006 |
| FR 2979725 | A1 | 08-03-2013 | AUCUN | | |
| US 2009180610 | A1 | 16-07-2009 | AT | 472133 T | 15-07-2010 |
| | | | CN | 101416154 A | 22-04-2009 |
| | | | EP | 2005291 A2 | 24-12-2008 |
| | | | JP | 2009532973 A | 10-09-2009 |
| | | | KR | 20090006176 A | 14-01-2009 |
| | | | US | 2009180610 A1 | 16-07-2009 |
| | | | WO | 2007113697 A2 | 11-10-2007 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090097637 A
- EP 1864211 A
- WO 2006103341 A
- FR 2979725

**Littérature non-brevet citée dans la description**

- Safe-Error Attack on SPA-FA Resistant Exponentiations Using a HW Modular Multiplier. **CHONG HEE KIM et al.** Information Security and Cryptology - ICISC 2007; [Lecture Notes in Computer Science. Springer Berlin Heidelberg, 29 Novembre 2007, 273-281